# EUROPÄISCHE PATENTSCHRIFT

(11) **EP 2 033 240 B1**
(45) Veröffentlichungstag und Bekanntmachung des Hinweises auf die Patenterteilung: **05.01.2011**
(21) Anmeldenummer: 07730298.2
(22) Anmeldetag: 22.06.2007
(51) Int. Cl.: H01L 41/04, H01L 41/09, H02N 2/14

(54) **VERFAHREN ZUM BETRIEB EINES STELLANTRIEBS UND STELLANTRIEB**
METHOD FOR OPERATING AN ACTUATING DRIVE AND ACTUATING DRIVE
PROCÉDÉ D'EXPLOITATION D'UN SERVOMOTEUR ET SERVOMOTEUR

(30) Priorität: 29.06.2006 DE 102006029925
(43) Veröffentlichungstag der Anmeldung: 11.03.2009
(73) Patentinhaber: Noliac A/S, 3490 Kvistgaard (DK)
(72) Erfinder: GOTTLIEB, Bernhard, 81739 München (DE); KAPPEL, Andreas, 85649 Brunnthal (DE); ROLDAN GOMEZ, Juan Manuel, 18100 Armilla (Granada) (ES); SCHWEBEL, Tim, 80337 München (DE); WALLENHAUER, Carsten, 01987 Schwarzheide (DE)
(74) Vertreter: Inspicos A/S
(86) Internationale Anmeldenummer: PCT/EP2007/056237
(87) Internationale Veröffentlichungsnummer: WO 2008/000695

(56) Entgegenhaltungen:
- WO-A-97/26702
- DE-A1- 19 806 127
- DE-A1- 19 845 042
- DE-A1- 19 952 946
- US-A- 5 079 471
- IWAO HAYASHI ET AL: "DEVELOPMENT OF A PIEZOELECTRIC CYCLOID MOTOR" MECHATRONICS, PERGAMON PRESS, OXFORD, GB, Bd. 2, Nr. 5, 1. Oktober 1992 (1992-10-01), Seiten 433-444, XP000297933 ISSN: 0957-4158

## Beschreibung

Die Erfindung betrifft ein Verfahren zum Betrieb eines Stellantriebs bzw. einen Stellantrieb nach der Gattung des Patentanspruchs 1 bzw. des Patentanspruchs 9.

Aus der DE 199 52 946 A1 ist ein Verfahren zum Betrieb eines Stellantriebs bzw. ein Stellantrieb bekannt, der eine Welle und einen Antriebsring aufweist, an den zumindest zwei Antriebselemente angreifen. Die Antriebselemente weisen Aktuatoren auf, welche von einer Antriebssteuerung angesteuert werden, wobei mittels der Aktuatoren über den Antriebsring die Welle in eine bestimmte Winkelposition gebracht wird. Ein derartiger Stellantrieb ist auch als Piezoringmotor (PRM) bekannt. Der Piezoringmotor (PRM) zeichnet sich unter anderem durch ein hohes Drehmoment, eine hohe Stellgenauigkeit, eine flache Bauform und inhärente Sensoreigenschaften aus. Mit diesem Piezoringmotor (PRM) kann über eine Antriebssteuerung eine beliebige Winkelposition der Welle mit hoher Genauigkeit angefahren und reproduziert werden. Zum Antrieb der Welle ist es neben dem Reibschluss zwischen Welle und Antriebsring auch bekannt, eine Mikroverzahnung zwischen Welle und Antriebsring vorzusehen.

Nur in Ausnahmesituationen, wie dem Überlastfall aufgrund eines äußeren Lastmoments auf den Stellantrieb, kann es zu einem Schlupf kommen, bei dem der Reibschluss unterbrochen wird bzw. es zu einem Überspringen eines Zahnes oder mehrerer Zähne der Mikroverzahnung kommt. Der Piezoringmotor (PRM) verliert im Überlastfall seine Winkelposition. Eine quantitative Erfassung dieses Schlupfes ist bislang nicht möglich, so dass im Schlupffall keine Kompensation der Abweichung der Winkelposition möglich ist bzw. keine präzise Ansteuerung in eine bestimmte Winkellage erfolgen kann.

Aus Iwao Hayashi et al., « Development of a Piezoelectric Cycloid Motor », Mechatronics, Vol. 2, No. 5, p. 433-444, (1992) ist ein Verfahren zum Betrieb eines Stellantriebes und ein Stellantrieb bekannt, bei dem Längenänderungen von piezoelektrischen Aktoren in eine Rotationsdrehung einer Antriebswelle umgesetzt werden. Es ist eine Messvorrichtung vorgesehen, mit der die Rotationsgeschwindigkeit der Welle erfasst wird und in Form eines Zählers an eine Recheneinheit weitergeleitet wird.

Aufgabe der Erfindung ist es, auch im Überlastfall bei auftretendem Schlupf eine präzise Ansteuerung in eine bestimmte Winkelposition zu erhalten bzw. zu ermöglichen. Dies erfolgt durch entsprechende Kompensation der Abweichung der Winkelposition. Des Weiteren ist es Aufgabe der Erfindung, einen entsprechenden Stellantrieb bereitzustellen, der es ermöglicht, auch in Ausnahmesituationen, wie dem Überlastfall aufgrund eines äußeren Lastmoments auf den Stellantrieb, eine präzise Ansteuerung in eine bestimmte Winkelposition aufrechtzuerhalten bzw. zu bewerkstelligen.

Die Aufgabe wird durch ein Verfahren zum Betrieb eines Stellantriebs bzw. einen Stellantrieb mit den Merkmalen des Patentanspruchs 1 bzw. des Patentanspruchs 9 gelöst.

Erfindungsgemäß wird ein Verfahren zum Betrieb des Stellantriebs vorgeschlagen, bei dem ein auftretender Schlupf zwischen Antriebsring und Welle von der Antriebssteuerung erkannt wird, indem von zumindest einem der Aktuatoren ein bei Schlupf erzeugter Puls von der Antriebssteuerung ausgewertet und der aufgetretene Schlupf quantitativ bestimmt wird, so dass von der Antriebssteuerung stets die tatsächliche eingenommene Winkelposition der Welle ermittelt werden kann. Aufgrund des bei Schlupf von zumindest einem der Aktuatoren erzeugten Pulses ist selbst bei auftretendem Schlupf weiterhin eine präzise Ansteuerung des Stellantriebs in eine bestimmte Winkelposition möglich.

Vorteilhaft ist, dass durch das erfindungsgemäße Verfahren ein neuer Ansatz geschaffen wird, der die inhärente Sensorfunktion von Aktuatoren zur quantitativen Bestimmung des Schlupfes im Betrieb des Stellantriebs als auch bei Stillstand des Stellantriebs nutzen kann.

Bei dem erfindungsgemäßen Stellantrieb wird vorgeschlagen, dass die Antriebssteuerung eine Auswerteschaltung zur Signalauswertung zumindest eines der Aktuatoren umfasst, welche bei auftretendem Schlupf zwischen Antriebsring und Welle diesen erkennt und quantitativ bestimmt, so dass von der Antriebssteuerung stets die tatsächliche eingenommene Winkelposition der Welle ermittelbar ist. Somit ist auch in Ausnahmesituationen, wie dem Überlastfall aufgrund eines äußeren Lastmoments auf den Stellantrieb, stets eine präzise Ansteuerung der Welle des Stellantriebs in eine bestimmte Winkelposition möglich.

Weitere Vorteile und vorteilhafte Ausgestaltungen der Erfindung ergeben sich aus den Unteransprüchen und der Beschreibung.

In Ausgestaltung des Verfahrens ist zur Kraftübertragung an Welle und Antriebsring eine Mikroverzahnung ausgebildet, die bei auftretendem Schlupf zu einem Überspringen von zumindest einem Zahn der Mikroverzahnung führt, dessen Überspringen zu einer Pulsabgabe an zumindest einem Aktuator führt, die von der Antriebssteuerung ausgewertet und der aufgetretene Schlupf quantitativ bestimmt wird, so dass von der Antriebssteuerung stets die tatsächliche eingenommene Winkelposition der Welle ermittelt werden kann. Vorteilhaft ist, dass die Mikroverzahnung sehr exakt durch die Ermittlung der Anzahl der übersprungenen Zähne die quantitative Bestimmung des Schlupfes bzw. dessen Rückrechnung der tatsächlichen aktuellen Drehwinkellage der Welle erlaubt.

In weiterer Ausgestaltung des Verfahrens umfasst die Antriebssteuerung eine einfache und zuverlässige Auswerteschaltung zur Signalauswertung, die aus einer Kette von Filtern und Komparatoren aufgebaut ist.

In weiterer Ausgestaltung des Verfahrens ist ein sinusförmiges Ansteuersignal für zumindest einen Aktuator vorgesehen, das einem Hochpass zugeführt wird, welcher nur die hochfrequenten Pulse ungefiltert weitergibt und anschließend einem nachgeschalteten ersten Komparator mit Hysterese weitergibt, der den hochfrequenten Puls in eine Folge von aufeinander folgenden Rechteckpulsen wandelt und in einem nachfolgenden Tiefpass und anschließendem zweiten Komparator zu einem Rechteckpuls wandelt, der einem bei Schlupf übersprungenen Zahn der Mikroverzahnung entspricht. Vorteilhaft ist die zuverlässige Bestimmung der Anzahl der übersprungenen Zähne mittels der vorliegenden Schaltung.

In weiterer Ausgestaltung des Verfahrens umfasst die Auswerteschaltung einen Mikrokontroller, der die erzeugten Pulse digital einfach und präzise weiterverarbeiten kann.

In weiterer Ausgestaltung des Verfahrens wird zur Antriebssteuerung eine spannungsgeregelte Piezotreiberstufe vorgesehen, deren Bandbreite auf maximal 200 Hz begrenzt wird. In Verbindung der vom zumindest einem Aktuator bei Schlupf abgegebenen Pulse, die in einem Frequenzbereich von etwa 20kHz liegen, ergibt sich eine genaue Bestimmung des vorgelegenen Schlupfes.

In Ausgestaltung des Stellantriebs ist zur Kraftübertragung an Welle und Antriebsring eine Mikroverzahnung ausgebildet, mittels der sehr exakt durch die Ermittlung der Anzahl der übersprungenen Zähne die quantitative Bestimmung des Schlupfes bzw. dessen Rückrechnung der tatsächlichen aktuellen Drehwinkellage der Welle mittels der Auswerteschaltung ermöglicht.

In weiterer Ausgestaltung des Stellantriebs ist die Auswerteschaltung sehr einfach und zuverlässig aus einer Kette von Filtern und Komparatoren aufgebaut.

In weiterer Ausgestaltung des Stellantriebs umfasst die Auswerteschaltung einen Mikrokontroller, der die erzeugten Pulse digital einfach und präzise weiterverarbeiten kann. Zeichnung

Ein Ausführungsbeispiel der Erfindung ist in der Zeichnung vereinfacht dargestellt und in der nachfolgenden Beschreibung näher erläutert.

Es zeigen:
- Fig. 1: in Draufsicht einen Schnitt eines erfindungs- gemäßen elektromechanischen Stellantriebs,
- Fig. 2: eine schematische Darstellung einer Auswerte- schaltung einer Antriebssteuerung für den Stellantrieb mit eingezeichneten Messstellen A, B, C und D,
- Fig. 3: ein sinusförmiges Ansteuersignal für einen Ak- tuator des Stellantriebs mit aufmodulierten Signalpulsen,
- Fig. 4: einen Ausschnitt aus dem Ansteuersignal gemäß Fig. 3 mit einem einzigen typischen Signalpuls und
- Fig. 5: Signalverläufe erhalten an Messstellen A, B, C und D gemäß Fig. 2.

### Beschreibung des Ausführungsbeispiels

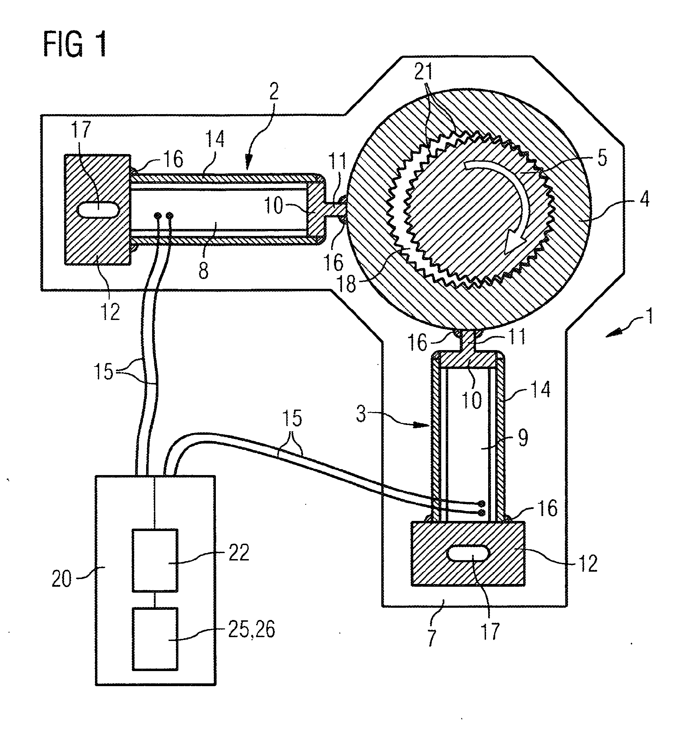

In Fig. 1 ist in Draufsicht ein Schnitt eines erfindungsgemäßen elektromechanischen Stellantriebs 1 gezeigt. Der Stellantrieb 1 weist mindestens zwei oder mehr Antriebselemente, ein erstes Antriebselement 2 und ein zweites Antriebselement 3, einen Antriebsring 4 und eine Welle 5 auf. Der Antriebsring 4 kann durch einen Hub der elektromechanischen Antriebselemente 2, 3 zu einer umlaufenden Verschiebebewegung angeregt werden, in dem die Hubamplituden der einzelnen Antriebselemente 2, 3 und die zeitliche Abstimmung der Hubamplituden untereinander entsprechend gesteuert wird. Der Stellantrieb 1 bzw. Motor besteht aus mindestens einer mechanischen Grundplatte 7, in der die Welle 5 des Stellantriebs 1 mittels eines nicht näher dargestellten Lagers möglichst spielfrei drehbar gelagert ist. Beide Antriebselemente 2, 3 verfügen über jeweils einen Aktuator 8, 9, der ein beliebiger elektromechanischer Wandler mit Sensorwirkung sein kann. Vorzugsweise handelt es sich um piezoelektrische Aktuatoren 8, 9, insbesondere in Form piezoelektrischer Niedervoltmultilayeraktuatoren. Die Aktuatoren 8, 9 sind jeweils über eine Kopfplatte 10, die einen Stößel 11 aufweist, einem Lagerblock 12 und einer mechanisch möglichst weichen, zum Beispiel geschlitzten Rohrfeder 14 unter hoher mechanischer Druckvorspannung verbaut. Die Druckvorspannung dient einerseits zur Vermeidung einer Schädigung der Aktuatoren 8, 9 durch Zugspannungskräfte, die bei einem hochfrequenten Dauerbetrieb auftreten können und andererseits zur Rückstellung der Aktuatoren 8, 9.

Eine dauerhaft feste Verbindung der Aktuatoren 8, 9 mit der Kopfplatte 10, dem Lagerblock 12, der Rohrfeder 14 und dem Antriebsring 4 erfolgt über Schweißpunkte 16. Der Lagerblock 12 ist mit der Grundplatte 7 fest verbunden. Möglich ist auch, den Lagerblock 12 mit der Grundplatte 7 zu verschweißen. Der möglichst steife und massearme konzentrische Antriebsring 4 ist mit den Stößeln 11 so verschweißt, das er zur Grundplatte 7 Abstand aufweist und somit frei beweglich ist. Die Antriebselemente 2, 3 sind in der Ebene der Grundplatte 7, die hier der Bewegungsebene entspricht, in einem Winkel von 90 Grad zueinander angeordnet, wobei die Hauptwirkrichtung der Antriebselemente 2, 3 auf den Mittelpunkt des Antriebsrings 4 gerichtet ist. Zur Erzeugung einer kreisförmigen Verschiebebewegung des Antriebsrings 4 werden die beiden Aktuatoren 8, 9 über elektrische Leitungen 15 von einer Antriebssteuerung 20, insbesondere mit zwei um 90 Grad phasenverschobenen sinusförmigen Spannungssignalen gleicher Spitzenamplitude, angesteuert, ähnlich einer Lissajous-Figur. Durch entsprechende Dimensionierung eines Spaltmaßes zwischen der Welle 5 und einer Innenfläche 18 des Antriebsrings 4 wird sichergestellt, dass während der Phase der Abrollbewegung ein starker Reibschluss zwischen Welle 5 und Antriebsring 4 besteht, der auch bei ausgeschaltetem Stellantrieb 1 bzw. ausgeschalteten Aktuatoren 8, 9 fortbesteht. Anstelle oder zusätzlich zum Reibschluss ist es möglich, eine Mikroverzahnung 21 an der Welle 5 und an der Innenfläche 18 des Antriebsrings 4 vorzusehen, die zur besseren Verdeutlichung in Fig. 1 in stark vergrößertem Maßstab dargestellt ist. Der Zahnabstand der Mikroverzahnung sollte dabei einem ganzzahligen Vielfachen der Umfangsdifferenz entsprechen. Ein Stellantrieb 1 in der Ausführung mit piezoelektrischen Aktuatoren 8, 9 ist auch als so genannter Piezoringmotor (PRM) bekannt.

Die Antriebssteuerung 20 beider Aktuatoren 8, 9 der Antriebselemente 2, 3 erfolgt über eine spannungsgeregelte Piezotreiberstufe 22, die vorzugsweise eine unipolare, periodisch um 90 Grad phasenverschobene sinusförmige Spannung an den beiden Antriebselementen 2, 3 bzw. Aktuatoren 8, 9 zur Verfügung stellt. Die Antriebssteuerung 20 ermöglicht eine Steuerung des Stellantriebs 1 mit seiner Welle 5 in eine beliebige Winkelposition mit sehr hoher Genauigkeit. Durch ein äußeres Lastmoment auf den Stellantrieb 1, wie es bei Überlast der Fall ist, kann es aber zu einem Schlupf zwischen Welle 5 und Antriebsring 4 kommen, dessen Größe quantitativ bisher nicht erfasst werden konnte, mit der Folge, dass die Abweichung von der Winkelposition nicht bekannt ist und somit vom Stellantrieb 1 nicht kompensiert werden kann. Erfindungsgemäß ist nun vorgesehen, den Schlupf quantitativ mit der Antriebssteuerung 20 zu erfassen, so dass selbst bei einem Überlastfall stets die genaue Winkelposition der Welle 5 erfasst bleibt, um so eine präzise Steuerung des Stellantriebs 1 zu erhalten. Hierzu wird ein nur im Überlastfall auftretender Sensoreffekt der Aktuatoren 8, 9 ausgenutzt, die im Überlastfall einen Signalpuls in Form eines Spannungs- oder Ladungspuls generieren, welcher dann von der Antriebssteuerung 20 zur Ermittlung des aufgetretenen Schlupfes herangezogen wird. Die von der Antriebssteuerung 20 ausgewerteten Pulse dienen zur Korrektur des Drehwinkelwerts des Stellantriebs 1 bzw. der erreichten Winkellage der Welle 5. Das Verfahren ist im Betrieb des Stellantriebs 1 auch bei Stillstand des Stellantriebs 1 ohne Rotation der Welle 5 einsetzbar.

Im Überlastfall ' kommt es bei einer Ausführung des Stellantriebs 1 mit Mikroverzahnung 21 zusätzlich oder anstelle des Reibschlusses zum Verlust der Winkelposition des Stellantriebs 1 bzw. der Welle 5, in dem die Aktuatoren 8, 9 und die Zähne der Verzahnung 21 elastisch verformt werden und die Zähne ohne Ansteuerung der Aktuatoren 8, 9 überspringen. Das Überspringen der Zähne kann erfindungsgemäß durch die Messung eines sich dann ergebenden Pulses an den Aktuatoren 8, 9, welche den Antriebsring 4 treiben, registriert werden. Der Motor arbeitet dann quasi im "Generatormode". Die Aktuatoren 8, 9 können beliebige elektromechanische Wandler mit Sensorwirkung sein. Der Puls im Schlupffall ist dann ein Spannungsoder Ladungspuls. Durch "Zählen" der Pulse mittels einer insbesondere in der Antriebssteuerung 20 integrierten Auswerteschaltung 25 kann die Anzahl der übersprungenen Zähne ermittelt bzw. gemessen und der neue Drehwinkel von der Auswerteschaltung 25 berechnet werden. Die ausgewerteten Pulse dienen zur Korrektur des Drehwinkelwertes des Stellantriebs 1. Damit ist es möglich, trotz aufgetretenem Schlupf, die Welle 5 präzise in eine vorgegebene Winkelposition zu steuern. Grundlage bildet somit die Messung von Ladungspulsen, die beim Schlupf durch Verlust des Reibschlusses oder durch Überspringen der Verzahnung 21 durch die piezoelektrischen Aktuatoren 8, 9 an einem oder mehreren Aktuatoren 8, 9 generiert werden.

Im Ausführungsbeispiel wird von einer spannungsgeregelten Piezotreiberstufe 22 für den Piezoringmotor ausgegangen. Die Bandbreite des Treibers 22 ist auf maximal 200 Hz begrenzt. Die energiereichsten Signalanteile, der im Überlastfall generierten Signalpulse (Ladungs- oder Spannungspulse) an zumindest einem der Aktuatoren 8, 9 liegen in einem hohen Frequenzbereich von 10 kHz für den Spezialfall des hier vorliegenden Piezoringmotors 1. Aufgrund der hohen Frequenz der Signalpulse werden diese von dem Piezotreiber 22 nicht ausgeregelt und stehen daher nahezu ungedämpft der Auswerteschaltung 25 der Antriebsteuerung 20 zur Verfügung. Die Funktionsweise ist überdies experimentell abgesichert.

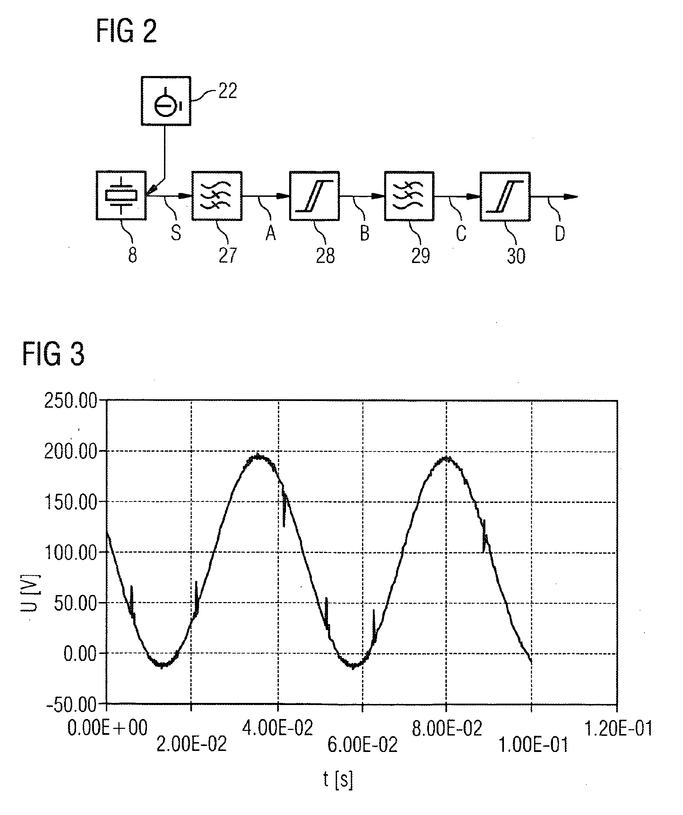

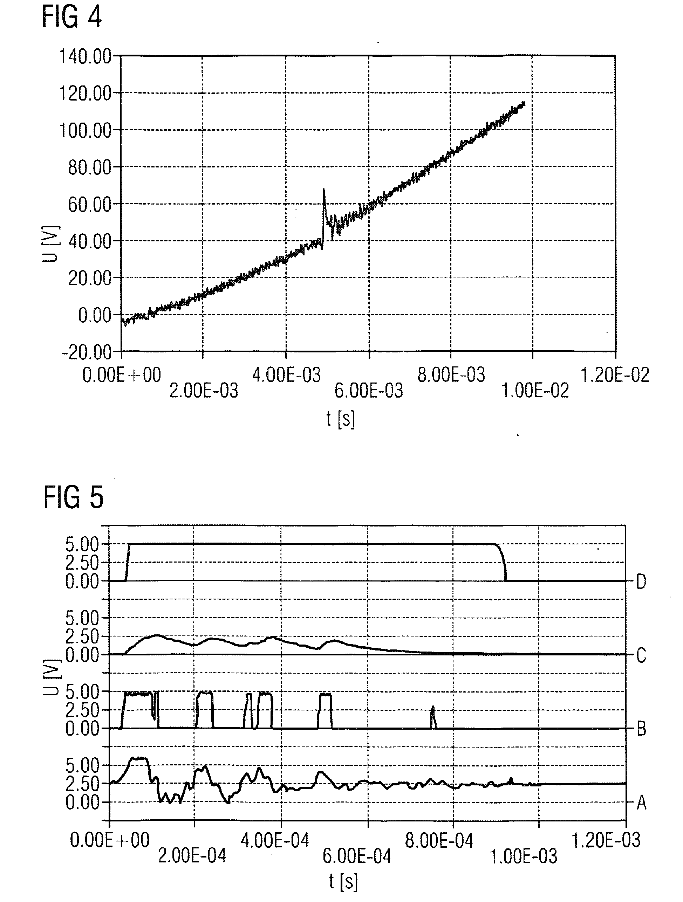

Die Fig. 3 zeigt das sinusförmige Ansteuersignal für die Aktuatoren 8, 9 im Motorbetrieb. Ein auftretender Schlupf bzw. ein Überspringen eines Zahnes bei Überlast bewirkt eine gedämpfte Schwingung, die den Signalpuls darstellt. Die gedämpfte Schwingung bzw. der Signalpuls liegt im Bereich einiger Kilohertz. Wie in Fig. 3 erkennbar, liegen bei dem Ansteuersignal für die Aktuatoren 8, 9 mehrere Signalpulse vor, die im Motorbetrieb dem Ansteuersignal der Aktuatoren 8, 9 aufmoduliert sind. In Fig. 4 ist ein einzelner typischer Signalpuls des Ansteuersignals eines Aktuators 8; 9 deutlicher dargestellt.

Durch eine geeignete Signalverarbeitung mittels Auswerteschaltung 25 lässt sich das durch Überspringen eines Zahnes erzeugte Signal in einen Puls wandeln, der anschließend durch eine geeignete Digitalschaltung, zum Beispiel in Form eines Mikrokontrollers 26, ausgewertet werden kann. Eine derartige Auswerteschaltung 25 für die von den Antriebselementen 2, 3 bei Schlupf abgegebenen Signalpulse ist in Fig. 2 schematisch angedeutet. Diese umfasst die Treiberstufe 22, die mit den Aktuatoren 8, 9 verbunden ist. Die zumindest einem Aktuator 8; 9 zugeführten Ansteuersignale werden einem Hochpass 27 zugeführt und anschließend einem ersten Komparator 28, dann einem Tiefpass 29 und anschließend einem zweiten Komparator 30. Die von der Auswerteschaltung 25 bereitgestellten Signale sind in Fig. 5 näher dargestellt. Die Bezeichnung der Signale A, B, C und D stimmen mit den bezeichneten Messpunkten in Fig. 2 überein. Am Messpunkt S in Fig. 2 wird ein Signal nach Fig. 3 gemessen bzw. ausgewertet.

In einem ersten Schritt wird das Ansteuersignal mit den aufmodulierten Pulsen gemäß Fig. 3 dem Hochpass 27 zugeführt, welcher nur die hochfrequenten Pulse ungefiltert weitergibt, wie dies der Signalverlauf A in Fig. 5 näher verdeutlicht. Das sinusförmige Ansteuersignal wird stark gedämpft. In dem nachfolgenden ersten Komparator 28 mit Hysterese wird der hochfrequente Puls (Signal A) in eine Folge dicht aufeinander folgenden Rechteckpulsen, so genannte Bursts, gewandelt, womit sich ein Signalverlauf B gemäß Fig. 5 einstellt. Dies bedeutet, dass ein übersprungener Zahn zu einer Vielzahl von Rechteckpulsen führt, die in den folgenden Schaltungsblöcken Tiefpass 29 und zweiter Komparator 30 zu einem einzigen Puls zusammengefasst werden. Hierzu wird das Signal B gemäß Fig. 5 von dem Tiefpass 29 gefiltert, wonach das Signal C gemäß Fig. 5 entsteht. Anschließend lässt sich durch den zweiten Komparator 30 das Signal C zu einem einzelnen Rechteckpuls Signal D gemäß Fig. 5 umformen. Als Ergebnis dieser Kettenschaltung steht ein digital-kompatibles Signal D zur Verfügung, welches einfach, zum Beispiel von einem anschließenden Mikrokontroller 26, ausgewertet werden kann. Jeder übersprungene Zahn führt zu einem diskreten Signalpuls, so dass die Anzahl der Pulse der Anzahl der übersprungenen Zähne entspricht. Damit ist es möglich, auch im Überlastfall die aktuelle Winkelposition mittels der Auswerteschaltung 25 der Antriebssteuerung 20 bzw. mittels des in der Auswerteschaltung 25 enthaltenen Mikrokontrollers 26 zu bestimmen.

## Patentansprüche

1. Verfahren zum Betrieb eines Stellantriebs (1), mit einer Antriebssteuerung (20), wobei der Stellantrieb (1) eine Welle (5) und einen Antriebsring (4) aufweist, an den zumindest zwei Antriebselemente (2, 3) angreifen, die Aktuatoren (8, 9) aufweisen, welche von einer Antriebssteuerung (20) angesteuert werden, wobei mittels der Aktuatoren (8, 9) über den Antriebsring (4) und eine Verzahnung (21) die Welle (5) in eine bestimmte Winkelposition gebracht wird, **dadurch gekennzeichnet, dass** bei auftretendem Schlupf zwischen Antriebsring (4) und Welle (5) dieser von der Antriebssteuerung (20) erkannt wird, indem von zumindest einem der Aktuatoren (8; 9) ein bei Schlupf erzeugter Puls von der Antriebssteuerung (20) ausgewertet und der aufgetretene Schlupf quantitativ bestimmt wird, so dass von der Antriebssteuerung (20) stets die tatsächliche eingenommene Winkelposition der Welle (5) ermittelt werden kann.

2. Verfahren nach Anspruch 1, **dadurch gekennzeichnet, dass** zur Kraftübertragung an Welle (5) und Antriebsring (4) eine Mikroverzahnung (21) ausgebildet ist, die bei auftretendem Schlupf zu einem Überspringen von zumindest einem Zahn der Mikroverzahnung (21) führt, dessen Überspringen zu einer Pulsabgabe an zumindest einem Aktuator (8; 9) führt, die von der Antriebssteuerung (20) ausgewertet und der aufgetretene Schlupf quantitativ bestimmt wird, so dass von der Antriebssteuerung (20) stets die tatsächliche eingenommene Winkelposition der Welle (5) ermittelt werden kann.

3. Verfahren nach Anspruch 1 oder 2, **dadurch gekennzeichnet, dass** die Antriebssteuerung (20) eine Auswerteschaltung (25) zur Signalauswertung zumindest eines der Aktuatoren (8; 9) umfasst, die aus einer Kette von Filtern (27, 29) und Komparatoren (28, 30) aufgebaut ist.

4. Verfahren nach Anspruch 3, **dadurch gekennzeichnet, dass** ein sinusförmiges Ansteuersignal für zumindest einen Aktuator (8, 9) einem Hochpass (27) zugeführt wird, welcher nur die hochfrequenten Pulse ungefiltert weitergibt und anschließend einem nachgeschalteten ersten Komparator (28) mit Hysterese weitergibt, der den hochfrequenten Puls in eine Folge von aufeinander folgenden Rechteckpulsen wandelt und in einem nachfolgenden Tiefpass (29) und anschließendem zweiten Komparator (30) zu einem Rechteckpuls wandelt, der einem bei Schlupf übersprungenen Zahn der Mikroverzahnung (21) entspricht.

5. Verfahren nach Anspruch 3, **dadurch gekennzeichnet, dass** die Auswerteschaltung (25) einen Mikrokontroller (26) umfasst.

6. Verfahren nach Anspruch 1 oder 2, **dadurch gekennzeichnet, dass** zur Antriebssteuerung eine spannungsgeregelte Piezotreiberstufe (22) vorhanden ist.

7. Verfahren nach Anspruch 6, **dadurch gekennzeichnet, dass** die Bandbreite der Piezotreiberstrufe (22) auf maximal 200 Hz begrenzt wird.

8. Verfahren nach Anspruch 7, **dadurch gekennzeichnet, dass** die vom zumindest einem Aktuator (8; 9) bei Schlupf abgegebenen Pulse in einem Frequenzbereich von etwa 20kHz liegen.

9. Stellantrieb (1) mit einer Antriebssteuerung, wobei der Stellantrieb (1) eine Welle (5) und einen Antriebsring (4) aufweist, an den zumindest zwei Antriebselemente (2, 3) angreifen, die Aktuatoren (8, 9) aufweisen, welche von der Antriebssteuerung (20) angesteuert, über den Antriebsring (4) und eine Verzahnung (21) die Welle (5) in eine bestimmte Winkelposition bringen, **dadurch gekennzeichnet, dass** die Antriebssteuerung (20) eine Auswerteschaltung (25) zur Signalauswertung zumindest eines der Aktuatoren (8; 9) umfasst, welche bei auftretendem Schlupf zwischen Antriebsring (4) und Welle (5) diesen erkennt und quantitativ bestimmt, so dass von der Antriebssteuerung (20) stets die tatsächliche eingenommene Winkelposition der Welle (5) ermittelbar ist.

10. Stellantrieb nach Anspruch 9, **dadurch gekennzeichnet, dass** zur Kraftübertragung an Welle (5) und Antriebsring (4) eine Mikroverzahnung (21) ausgebildet ist.

11. Stellantrieb nach Anspruch 9 oder 10, **dadurch gekennzeichnet, dass** die Auswerteschaltung (25) aus einer Kette von Filtern (27, 29) und Komparatoren (28, 30) aufgebaut ist.

12. Stellantrieb nach Anspruch 11, **dadurch gekennzeichnet, dass** die Auswerteschaltung (25) einen Mikrokontroller (26) umfasst.

## Claims

1. Method for operating an actuating drive (1), having a drive control (20), wherein the actuating drive (1) has a shaft (5) and a drive ring (4), on which at least two drive elements (2, 3) engage which have actuators (8, 9) which are controlled by a drive control (20), wherein by means of the actuators (8, 9), the shaft (5) is brought to a certain angular position via the drive ring (4) and gearing (21), **characterised in that** when slippage occurs between drive ring (4) and shaft (5), it is detected by the drive control (20), **in that** a pulse generated during slippage is evaluated by the drive control (20) by at least one of the actuators (8; 9) and the slippage which has occurred is determined quantitatively so that the actually occupied angular position of the shaft (5) may always be ascertained by the drive control (20).

2. Method according to claim 1, **characterised in that** to transfer force to shaft (5) and drive ring (4), micro-gearing (21) is designed which leads to skipping of at least one tooth of the micro-gearing (21) when slippage occurs, the skipping of the micro-gearing (21) leading to pulse emission at least at one actuator (8; 9) which is evaluated by the drive control (20) and the slippage which has occurred is determined quantitatively so that the actually occupied angular position of the shaft (5) may always be ascertained by the drive control (20).

3. Method according to claim 1 or 2, **characterised in that** the drive control (20) comprises an evaluating circuit (25) for signal evaluation of at least one of the actuators (8; 9) which is constructed from a chain of filters (27, 29) and comparators (28, 30).

4. Method according to claim 3, **characterised in that** a sinusoidal control signal for at least one actuator (8, 9) is fed to a high pass (27) which relays in non-filtered manner only the high-frequency pulse and then relays it to a downstream first comparator (28) with hysteresis which converts the high-frequency pulse into a series of sequential square-wave pulses and converts them in a following low pass (29) and subsequent second comparator (30) to form a square-wave pulse which corresponds to one skipped tooth of the micro-gearing (21) during slippage.

5. Method according to claim 3, **characterised in that** the evaluating circuit (25) comprises a micro-controller (26).

6. Method according to claim 1 or 2, **characterised in that** a voltage-regulated piezo driver (22) is present for drive control.

7. Method according to claim 6, **characterised in that** the bandwidth of the piezo driver (22) is limited to 200 Hz maximum.

8. Method according to claim 7, **characterised in that** the pulses emitted during slippage by at least one actuator (8; 9) lie in a frequency range of about 20 kHz.

9. Actuating drive (1) having a drive control, wherein the actuating drive (1) has a shaft (5) and a drive ring (4), on which at least two drive elements (2, 3) engage which have actuators (8, 9) which, controlled by the drive control (20), bring the shaft (5) to a certain angular position via the drive ring (4) and gearing (21), **characterised in that** the drive control (20) comprises an evaluating circuit (25) for signal evaluation of at least one of the actuators (8; 9), which, when slippage occurs between drive ring (4) and shaft (5), detects the latter and determines it quantitatively so that the actually occupied angular position of the shaft (5) can always be ascertained by the drive control (20).

10. Actuating drive according to claim 9, **characterised in that** micro-gearing (21) is designed to transfer force to shaft (5) and drive ring (4).

11. Actuating drive according to claim 9 or 10, **characterised in that** the evaluating circuit (25) is constructed from a chain of filters (27, 29) and comparators (28, 30).

12. Actuating drive according to claim 11, **characterised in that** the evaluating circuit (25) comprises a micro-controller (26).

## Revendications

1. Méthode d'exploitation d'un servomoteur (1) comportant une commande d'actionnement (20), le servomoteur (1) présentant un arbre (5) et un anneau d'actionnement (4) sur lequel s'engrènent au moins deux éléments d'actionnement (2, 3) présentant des actionneurs (8, 9) qui sont entraînés par une commande d'actionnement (20), l'arbre (5) étant amené au moyen des actionneurs (8, 9) par l'intermédiaire de l'anneau d'actionnement (4) et d'une denture (21) à une position angulaire déterminée, **caractérisée en ce que**, en cas de patinage survenant entre l'anneau d'actionnement (4) et l'arbre (5), ce patinage est détecté par la commande d'actionnement (20) par le fait qu'une impulsion générée par au moins un des actionneurs (8, 9) lors du patinage est exploitée par la commande d'actionnement (20) et que le patinage survenu est déterminé quantitativement, de sorte que la position angulaire réelle prise par l'arbre (5) peut toujours être déterminée par la commande d'actionnement (20).

2. Méthode selon la revendication 1, **caractérisée en ce que**, pour la transmission de force une microdenture (21) est constituée à l'arbre (5) et à l'anneau d'actionnement (4) qui, en cas de patinage survenant, mène à un saut d'au moins une dent de la microdenture (21) dont le saut entraîne au niveau d'au moins un actionneur (8 ; 9) une émission d'impulsion qui est exploitée par la commande d'actionnement (20) et que le patinage survenu est déterminé quantitativement, de sorte que la position angulaire réelle prise par l'arbre (5) peut toujours être déterminée par la commande d'actionnement (20).

3. Méthode selon la revendication 1 ou 2, **caractérisée en ce que** la commande d'actionnement (20) comprend un circuit d'exploitation (25) pour évaluer les signaux d'au moins un des actionneurs (8 ; 9), lequel circuit d'exploitation est constitué d'une chaîne de filtres (27, 29) et de comparateurs (28, 30).

4. Méthode selon la revendication 3, **caractérisée en ce qu'**un signal de commande sinusoïdal pour au moins un actionneur (8, 9) est envoyé à un passe-haut (27) qui ne retransmet non filtrées que les impulsions à haute fréquence puis les retransmet avec une hystérésis à un premier comparateur installé en aval (28) qui transforme l'impulsion à haute fréquence en une série d'impulsions rectangulaires se succédant et, dans un passe-bas suivant (29) et un deuxième comparateur (30) suivant, la transforme en une impulsion rectangulaire qui correspond à une dent sautée de la microdenture (21) en cas de patinage.

5. Méthode selon la revendication 3, **caractérisée en ce que** le circuit d'exploitation (25) comprend un microcontrôleur (26).

6. Méthode selon la revendication 1 ou 2, **caractérisée en ce qu'**un étage piézopilote à tension régulée (22) est disponible pour la commande d'actionnement.

7. Méthode selon la revendication 6, **caractérisée en ce que** la largeur de bande de l'étage piézopilote (22) est limitée à 200 Hz au maximum.

8. Méthode selon la revendication 7, **caractérisée en ce que** les impulsions émises en cas de patinage par au moins un actionneur (8 ; 9) se situent dans une plage de fréquence d'environ 20 kHz.

9. Servomoteur (1) comprenant une commande d'actionnement, le servomoteur (1) présentant un arbre (5) et un anneau d'actionnement (4) sur lequel s'engrènent au moins deux éléments d'actionnement (2, 3) présentant des actionneurs (8, 9) qui, entraînés par la commande d'actionnement (20), amènent l'arbre (5), par l'intermédiaire de l'anneau d'actionnement (4) et d'une denture (21), à une position angulaire déterminée, **caractérisé en ce que** la commande d'actionnement (20) comprend un circuit d'exploitation (25) pour exploiter les signaux d'au moins un des actionneurs (8 ; 9), lequel circuit d'exploitation, en cas de patinage survenant entre l'anneau d'actionnement (4) et l'arbre (5), détecte et détermine quantitativement ce patinage, de sorte que la position angulaire réelle prise par l'arbre (5) peut toujours être déterminée par la commande d'actionnement (20).

10. Servomoteur selon la revendication 9, **caractérisé en ce que**, pour la transmission de force, une microdenture (21) est formée sur l'arbre (5) et sur l'anneau d'actionnement (4).

11. Servomoteur selon la revendication 9 ou 10, **caractérisé en ce que** le circuit d'exploitation (25) est constitué d'une chaîne de filtres (27, 29) et de comparateurs (28, 30).

12. Servomoteur selon la revendication 11, **caractérisé en ce que** le circuit d'exploitation (25) comprend un microcontrôleur (26).
